# EUROPÄISCHE PATENTSCHRIFT

(11) **EP 0 888 393 B1**
(45) Veröffentlichungstag und Bekanntmachung des Hinweises auf die Patenterteilung: **14.06.2000**
(21) Anmeldenummer: 97914212.2
(22) Anmeldetag: 10.03.1997
(51) Int. Cl.: C08G 18/48, C08G 18/50, C08J 9/14

(54) **VERFAHREN ZUR HERSTELLUNG KOHLENWASSERSTOFF-GETRIEBENER POLYURETHAN-HARTSCHAUMSTOFFE**
PROCESS FOR PRODUCING HYDROCARBON-BLOWN HARD POLYURETHANE FOAMS
PROCEDE DE FABRICATION DE MOUSSE RIGIDE DE POLYURETHANNE EXPANSEE AUX HYDROCARBURES

(30) Priorität: 22.03.1996 DE 19611367
(43) Veröffentlichungstag der Anmeldung: 07.01.1999
(73) Patentinhaber: BAYER AG, 51368 Leverkusen (DE)
(72) Erfinder: DIETRICH, Karl, Werner, D-51519 Odenthal (DE); EISEN, Norbert, D-50999 Köln (DE); HEILIG, Gerhard, D-51467 Bergisch Gladbach (DE)
(86) Internationale Anmeldenummer: EP9701198
(87) Internationale Veröffentlichungsnummer: WO9735899

(56) Entgegenhaltungen:
- WO-A-94/03515
- WO-A-95/18175
- US-A- 5 308 885
- US-A- 5 451 615
- DATABASE WPI Section Ch, Week 9512 Derwent Publications Ltd., London, GB; Class A25, AN 95-085467 XP002033167 & JP 07 010 955 A (POLYURETHANE KASEI KK) , 13.Januar 1995
- DATABASE WPI Section Ch, Week 9439 Derwent Publications Ltd., London, GB; Class A25, AN 94-313741 XP002033168 & JP 06 239 956 A (SUMITOMO BAYER URETHANE CO) , 30.August 1994
- 35TH ANNUAL POLYURETHANE TECHNICAL/MARKETING CONFERENCE, 9. - 12.Oktober 1994, Seiten 300-310, XP000654827 H.YOSHIMURA, ET AL.: "An insight into the Characteristics of a nucleation catalyst in CFC-free rigid foam systems"

## Beschreibung

Es ist bekannt, Polyurethan-Hartschaumstoffe mit niedrig siedenden Alkanen zu treiben. Mit Vorteil werden hier cyclische Alkane verwendet, die aufgrund ihrer niedrigen Gaswärmeleitfähigkeit einen hervorragenden Beitrag zur Wärmeleitfähigkeit des Schaumstoffes leisten. Hierbei wird bevorzugt Cyclopentan verwendet.

Den guten Eigenschaften bei der Anwendung als Dämmstoff für Kühlmöbel stehen negative kommerzielle Aspekte gegenüber. So muß aufgrund der Lösungsmitteleigenschaften von Cyclopentan eine bestimmte Polystyrolinnenbehälterqualität verwendet werden.

Cyclopentan hat desweiteren jedoch aufgrund seines relativ hohen Siedepunktes von 49°C den Nachteil, daß es bei tiefen Temperaturen - und diese sind bei der Anwendung von Polyurethan-Hartschaumstoff als Dämmstoff bei Kühlmöbeln üblich - kondensiert. Durch die unerwünschte Kondensation des Treibmittels wird ein Unterdruck in der Zelle erzeugt, der wiederum durch erhöhte Schaumfestigkeit bzw. erhöhte Rohdichte aufgefangen werden muß.

Verglichen mit den acyclischen homologen Pentanverbindungen - n- und i-Pentan -weist Cyclopentan höhere Herstellkosten auf. n- oder i-Pentan-getriebene Systeme sind seit längerem für Polyurethan-Hartschaumstoffe bekannt. Nachteilig sind jedoch die im Vergleich zu Cyclopentan höheren Gaswärmeleitfähigkeiten, die in einem schlechteren Wärmedämmvermögen entsprechend geschäumter Systeme resultieren.

Außerdem ist die Löslichkeit von n- und i-Pentan in Polyolen deutlich schlechter als bei Cyclopentan, was einen negativen Einfluß auf die Produktionssicherheit und die Haftung des Schaumstoffs auf Deckschichten hat.

Aufgabe der vorliegenden Erfindung war es, einen n- oder c-Pentan-getriebenen Hartschaumstoff zu entwickeln, bei dem die oben genannten Nachteile überwunden werden.

Überraschenderweise wurde nun gefunden, daß Polyolformulierungen auf Basis von aromatischen Aminen, Sucrose und Propylenglykol gut haftende Schaumstoffe mit niedrigerer Wärmeleitzahl lieferten. Die Löslichkeit der acyclischen Pentane erfüllte alle Anforderungen.

Gegenstand der vorliegenden Erfindung ist somit ein Verfahren zur Herstellung von harten Urethan- und gegebenenfalls Isocyanuratgruppen-aufweisenden Schaumstoffen, dadurch gekennzeichnet, daß ein Polyurethan-Hartschaumstoff durch Umsetzung eines
a) aromatischen Polyisocyanats mit
b) einer im Mittel mindestens 3 gegenüber Isocyanaten reaktive Wasserstoffatome-aufweisenden Polyolkomponente, enthaltend
   1) 30 bis 80 Gew.-% eines aromatischen Amin-gestarteten Polyethers vom Molekulargewicht 300 bis 700 auf Basis von 70 bis 100 Gew.-% 1,2-Propylenoxid und 0 bis 30 Gew.-% Ethylenoxid
   2) 10 bis 40 Gew.-% eines im wesentlichen Sucrose-gestarteten Polyethers vom Molekulargewicht 400 bis 1.000 auf Basis von 70 bis 100 Gew.-% 1,2-Propylenoxid und 0 bis 30 Gew.-% Ethylenoxid
   3) 5 bis 30 Gew.-% eines Propylenglykol-gestarteten Polyethers vom Molekulargewicht 500 bis 1.500 auf Basis von 70 bis 100 Gew.-% 1,2-Propylenoxid und 0 bis 30 Gew.-% Ethylenoxid
   4) n- und/oder i-Pentan als Treibmittel
   5) Wasser
   6) gegebenenfalls Hilfs- und Zusatzstoffe
hergestellt wird, wobei sich die Gew.-% der Komponente 1), 2) und 3) zu 100 ergänzen.

Unter aromatischen Amin-gestarteten Polyether werden bevorzugt solche auf Basis o-Toluylendiamin verstanden. Dieser Starter wird vorzugsweise mit 1,2-Propylenoxid umgesetzt. Die Molekulargewichte dieser Polyether liegen bevorzugt zwischen 300 und 800, besonders bevorzugt zwischen 500 und 600. In Polyolformulierungen beträgt der bevorzugte Anteil der aromatischen Aminpolyether 30 bis 80 Gew.-%, besonders bevorzugt 35 bis 70 Gew.-%.

Die Sucrose-gestarteten Polyether werden bevorzugt durch Umsatz mit 1,2-Propylenoxid hergestellt; gegebenenfalls wird als Co-Starter Diethylenglykol, Ethylenglykol oder Propylenglykol in Mengen von 10 bis 30 Gew.-% verwendet.

Die Molekulargewichte liegen bevorzugt zwischen 400 und 1.000, besonders bevorzugt zwischen 500 und 600. In Polyolformulierungen beträgt der Anteil der Sucrose-gestarteten Polyether vorzugsweise 10 bis 40 Gew.-%, besonders bevorzugt 15 bis 35 Gew.-%.

Propylenglykol-gestartete Polyether werden ebenfalls durch Umsetzung mit 1,2-Propylenoxid hergestellt.

Vorzugsweise werden Polyether mit einem Molekulargewicht zwischen 500 und 1.500 verwendet, besonders bevorzugt zwischen 900 und 1.100.

In Polyolformulierungen beträgt ihr Anteil vorzugsweise 5 bis 30 Gew.-%, besonders bevorzugt 15 bis 25 Gew.-%.

Durch Verwendung von Polyolformulierungen gemäß Erfindung konnten n- und i-Pentan-getriebene Schaumstoffe mit niedriger Wärmeleitzahl und guter Haftung an Deckschichten hergestellt werden.

Als Co-Treibmittel enthalten die Polyolformulierungen zwischen 0,5 und 3,5 Gew.-% Wasser, bevorzugt zwischen 1,5 und 2,5 Gew.-%.

Als Polyisocyanate können nach dem erfindungsgemäßen Verfahren alle an sich bekannten Ausgangskomponenten eingesetzt werden.

Als Isocyanatkomponente sind z.B. aromatische Polyisocyanate, wie sie z.B. von W. Siefken in Justus Liebigs Annalen der Chemie, 562, Seiten 75 bis 136, beschrieben werden, beispielsweise solche der Formel

Q(NCO)ₙ,

in der
- n: 2 bis 4, vorzugsweise 2, und
- Q: einen aliphatischen Kohlenwasserstoffrest mit 2 bis 18, vorzugsweise 6 bis 10, C-Atomen, einen cycloaliphatischen Kohlenwasserstoffrest mit 4 bis 15, vorzugsweise 5 bis 10, C-Atomen, einen aromatischen Kohlenwasserstoffrest mit 8 bis 15, vorzugsweise 8 bis 13, C-Atomen bedeuten, z.B. solche Polyisocyanate, wie sie in der DE-OS 2 832 253, Seiten 10 bis 11, beschrieben werden.

Besonders bevorzugt werden in der Regel die technisch leicht zugänglichen Polyisocyanate, z.B. das 2,4- und 2,6-Toluylendiisocyanat sowie beliebige Gemische dieser Isomeren ("TDI"), Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allphanatgruppen, Isocyanuratgruppen, Harnstoffgruppen oder Biuretgruppen aufweisende Polyisocyanate ("modifizierte Polyisocyanate", insbesondere modifizierte Polyisocyanate, die sich vom 2,4- und 2,6-Toluylendiisocyanat bzw. vom 4,4'- und/oder 2,4'-Diphenylmethandiisocyanat ableiten.

Paraffine oder Fettalkohole oder Dimethylpolysiloxane sowie Pigmente oder Farbstoffe, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß oder Schlämmkreide, können mitverwendet werden.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Farbstoffe und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z.B. auf den Seiten 121 bis 205, beschrieben.

Bei der Schaumherstellung kann erfindungsgemäß die Verschäumung auch in geschlossenen Formen durchgeführt werden. Dabei wird das Reaktionsgemisch in eine Form eingetragen. Als Formmaterial kommt Metall, z.B. Aluminium, oder Kunststoff, z.B. Epoxidharz, in Frage. In der Form schäumt das schäumfähige Reaktionsgemisch auf und bildet den Formkörper. Die Formverschäumung kann dabei so durchgeführt werden, daß das Formteil an seiner Oberfläche Zellstruktur aufweist. Sie kann aber auch so durchgeführt werden, daß das Formteil eine kompakte Haut und einen zelligen Kern aufweist. Erfindungsgemäß geht man im erstgenannten Fall so vor, daß man in die Form so viel schäumfähiges Reaktionsgemisch einträgt, daß der gebildete Schaumstoff die Form gerade ausfüllt. Die Arbeitsweise im letztgenannten Fall besteht darin, daß man mehr schäumfähiges Reaktionsgemisch in die Form einträgt, als zur Ausfüllung des Forminneren mit Schaumstoff notwendig ist. Im letzteren Fall wird somit unter "overcharging" gearbeitet, eine derartige Verfahrensweise ist z.B. aus den US-PS 3 178 490 und 3 182 104 bekannt.

Gegenstand der Erfindung ist auch die Verwendung der erfindungsgemäß hergestellten Hartschaumstoffe als Zwischenschicht für Verbundelemente und zum Ausschäumen von Hohlräumen im Kühlmöbelbau.

Vorzugsweise wird das erfindungsgemäße Verfahren zur Ausschäumung von Hohlräumen von Kühl- und Gefriergeräten verwendet.

Selbstverständlich können auch Schaumstoffe durch Blockverschäumung oder nach dem an sich bekannten Doppeltransportbandverfahren hergestellt werden.

Die nach der Erfindung erhältlichen Hartschaumstoffe finden Anwendung z.B. im Bauwesen sowie für die Dämmung von Femwärmerohren und Containern.

Die folgenden Beispiele sollen die Erfindung erläutern, ohne sie jedoch in ihrem Umfang zu begrenzen.

### Beispiel 1 (Vergleichsbeispiel)

Rezeptur für Polyurethan-Hartschaumstoff

| Komponente A: | |
|---|---|
| 75 Gew.-Teile | Sucrose (80 Gew.-%), Propylenglykol-(20 Gew.-%)-gestarteter Polyether vom Molekulargewicht 600 auf Basis von Propylenoxid |
| 25 Gew.-Teile | Propylenglykol-gestarteter Polyether vom Molekulargewicht 1.000 auf Basis von 1,2-Propylenoxid |
| 2,5 Gew.-Teile | Wasser |
| 2,0 Gew.-Teile | Schaumstabilisator B 8423 (Fa. Goldschmidt) |
| 2,0 Gew.-Teile | Aktivator Desmorapid 726b (Fa. Bayer AG) |

| Komponente B: | |
|---|---|
| 128 Gew.-Teile | rohes MDI (NCO-Gehalt = 31,5 Gew.-%) |
| 100 Gew.-Teile der Komponente A wurden mit 11 Gew.-Teilen n-Pentan und 128 Gew.-Teilen der Komponente B mittels eines Rührers (1.000 UpM) bei 20°C gemischt und in einer geschlossenen Form auf 34 kg/m³ verdichtet. | |

### Beispiel 2 (Vergleichsbeispiel)

| Komponente A | |
|---|---|
| 50 Gew.-Teile | o-Toluylendiamin-gestarteter Polyether vom Molekulargewicht 560 auf Basis von 1,2-Propylenoxid |
| 50 Gew.-Teile | Sucrose (80 Gew.-%) Propylenglykol-(20 Gew.-%)-gestarteter Polyether vom Molekulargewicht 600 auf Basis von 1,2-Propylenoxid |
| 2,5 Gew.-Teile | Wasser |
| 2,0 Gew.-Teile | Schaumstabilisator B 8423 (Fa. Goldschmidt) |
| 2,0 Gew.-Teile | Aktivator Desmorapid 726b (Fa. Bayer AG) |

| Komponente B: | |
|---|---|
| 141 Gew.-Teile | rohes MDI (NCO-Gehalt 31,5 Gew.-%) |
| 100 Gew.-Teile der Komponente A wurden mit 11 Gew.-Teilen n-Pentan und 141 Gew.-Teilen der Komponente B mittels eines Rührers (1.000 UpM) bei 20°C gemischt und in einer geschlossenen Form auf 34 kg/m³ verdichtet. | |

### Beispiel 3 (Vergleichsbeispiel)

| Komponente A: | |
|---|---|
| 75 Gew.-Teile | o-Toluylendiamin-gestarteter Polyether vom Molekulargewicht 560 auf Basis von 1,2-Propylenoxid |
| 25 Gew.-Teile | Propylenglykol-gestarteter Polyether vom Molekulargewicht 1.000 auf Basis von 1,2-Propylenoxid |
| 2,5 Gew.-Teile | Wasser |
| 2,0 Gew.-Teile | Schaumstabilisator B 8423 (Fa. Goldschmidt) |
| 2,0 Gew.-Teile | Aktivator Desmorapid 726b (Fa. Bayer AG) |

| Komponente B: | |
|---|---|
| 115 Gew.-Teile | rohes MDI (NCO-Gehalt 31,5 Gew.-%) |
| 100 Gew.-Teile der Komponente A wurden mit 11 Gew.-Teilen n-Pentan und 115 Gew.-Teilen der Komponente B mittels eines Rührers (1.000 UpM) bei 20°C gemischt und in einer geschlossenen Form auf 34 kg/m³ verdichtet. | |

### Beispiel 4 (erfindungsgemäß)

| Komponente A: | |
|---|---|
| 50 Gew.-Teile | o-Toluylendiamin-gestarteter Polyether vom Molekulargewicht 560 auf Basis von 1,2-Propylenoxid |
| 30 Gew.-Teile | Sucrose (80 Gew.-%) Propylenglykol-(20 Gew.-%)-gestarteter Polyether vom Molekulargewicht 600 auf Basis von 1,2 Propylenoxid |
| 20 Gew.-Teile | Propylenglykol-gestarteter Polyether vom Molekulargewicht 1.000 auf Basis von 1,2-Propylenoxid |
| 2,5 Gew.-Teile | Wasser |
| 2,0 Gew.-Teile | Schaumstabilisator B 8423 (Fa. Goldschmidt) |
| 2,0 Gew.-Teile | Aktivator Desmorapid 726b (Fa. Bayer AG) |

| Komponente B: | |
|---|---|
| 124 Gew.-Teile | rohes MDI (NCO-Gehalt 31,5 Gew.-%) |
| 100 Gew.-Teile der Komponente A wurden mit 11 Gew.-Teilen n-Pentan und 124 Gew.-Teilen der Komponente B mittels eines Rührers (1.000 UpM) bei 20°C gemischt und in einer geschlossenen Form auf 34 kg/m³ verdichtet. | |

### Ergebnisse

Von den in den Beispielen 1 bis 4 hergestellten Schaumstoffplatten wurden die in der Tabelle dargelegten Prüfwerte erhalten.

| Beispiel | Wärmeleitzahl [mW/mK] gemäß DIN 52616, 24°C | Druckfestigkeit [Mpa] gemäß DIN 53421, 10 % Stauchung | Haftung [MPa] gemäß DIN 53292 an Blech | Grenzlöslichkeit [GT/100 GT Polyol] von n-Pentan in Polyolmischung, 20°C |
|---|---|---|---|---|
| 1 | 24 | 0,18 | 0,09 | 9 |
| 2 | 23,5 | 0,16 | 0,01 | 11 |
| 3 | 23,3 | 0,10 | 0,12 | 25 |
| 4 | 22,7 | 0,17 | 0,11 | 20 |

Wie die Versuche zeigen, bietet nur der Schaumstoff des erfindungsgemäßen Beispiels 4 gute bis sehr gute Eigenschaften bezüglich Wärmeleitzahl, Druckfestigkeit, Haftung am Blech und Pentanlöslichkeit der Polyolformulierung.

Vergleichsbeispiel 1 liefert Schaumstoffe mit hoher Wärmeleitzahl. Desweiteren ist die Pentanlöslichkeit im Polyol nicht ausreichend.

Die im Vergleichsbeispiel 2 hergestellten Schaumstoffe weisen eine ungenügende Haftung am Blech auf; die Pentanlöslichkeit liegt im Grenzbereich.

Vergleichsbeispiel 3 liefert Schaumstoffe mit guter Haftung und guter Pentanlöslichkeit der Polyolformulierung; aber ungenügende Druckfestigkeit.

## Patentansprüche

1. Verfahren zur Herstellung von harten Urethan- und gegebenenfalls Harnstoff- und Isocyanuratgruppen aufweisenden Schaumstoffen, dadurch gekennzeichnet, daß ein Polyurethan-Hartschaumstoff durch Umsetzung eines
a) aromatischen Polyisocyanats mit
b) einer im Mittel mindestens 3 gegenüber Isocyanaten reaktive Wasserstoffatome-aufweisenden Polyolkomponente, enthaltend
1) 30 bis 80 Gew.-% eines aromatischen Amin-gestarteten Polyethers vom Molekulargewicht 300 bis 800 auf Basis von 70 bis 100 Gew.-% 1,2-Propylenoxid und 0 bis 30 Gew.-% Ethylenoxid
2) 10 bis 40 Gew.-% eines im wesentlichen Sucrose-gestarteten Polyethers vom Molekulargewicht 400 bis 1.000 auf Basis von 70 bis 100 Gew.-% 1,2-Propylenoxid und 0 bis 30 Gew.-% Ethylenoxid
3) 5 bis 30 Gew.-% eines Propylenglykol-gestarteten Polyethers vom Molekulargewicht 500 bis 1.500 auf Basis von 70 bis 100 Gew.-% 1,2-Propylenoxid und 0 bis 30 Gew.-% Ethylenoxid
4) n- und/oder i-Pentan als Treibmittel
5) Wasser
6) gegebenenfalls Hilfs- und Zusatzstoffe
hergestellt wird, wobei sich die Gew.-% der Komponente 1), 2) und 3) zu 100 ergänzen.

2. Verfahren gemäß Anspruch 1, dadurch gekennzeichnet, daß ein aromatischer Amin-gestarteter Polyether auf Basis von o-Toluylendiamin eingesetzt wird.

3. Verfahren gemäß Anspruch 1, dadurch gekennzeichnet, daß eine Polyolkomponente mit 50 bis 60 Gew.-% des o-Toluylendiamin-gestarteten Polyethers vom Molekulargewicht von 450 bis 650 auf Basis von 1,2-Propylenoxid eingesetzt wird.

4. Verfahren nach Anspruch 1, dadurch gekennzeichnet, daß eine Polyolkomponente mit 10 bis 25 Gew.-% eines Propylenglykol-gestarteten Polyethers vom Molekulargewicht 800 bis 1.200 auf Basis von 1,2-Propylenoxid eingesetzt wird.

## Claims

1. A process for preparing rigid expanded materials containing urethane and optionally urea and isocyanurate groups, characterised in that a polyurethane rigid foam is prepared by reacting
a) an aromatic polyisocyanate with
b) a polyol component with on average at least 3 hydrogen atoms which can react with isocyanates, containing
1) 30 to 80 wt.% of an aromatic amine started polyether with a molecular weight of 300 to 800 based on 70 to 100 wt.% of 1,2-propylene oxide and 0 to 30 wt.% of ethylene oxide
2) 10 to 40 wt.% of a substantially sucrose started polyether with a molecular weight of 400 to 1,000 based on 70 to 100 wt.% of 1,2-propylene oxide and 0 to 30 wt.% of ethylene oxide
3) 5 to 30 wt.% of a propylene glycol started polyether with a molecular weight of 500 to 1,500 based on 70 to 100 wt.% of 1,2-propylene oxide and 0 to 30 wt.% of ethylene oxide
4) n-pentane and/or i-pentane as blowing agent
5) water
6) optional auxiliary agents and additives,
wherein the sum of the wt.% of components 1), 2) and 3) is 100.

2. A process according to Claim 1, characterised in that an aromatic amine started polyether based on o-toluylene diamine is used.

3. A process according to Claim 1, characterised in that a polyol component with 50 to 60 wt.% of toluylene diamine started polyether with a molecular weight of 450 to 650 based on 1,2-propylene oxide is used.

4. A process according to Claim 1, characterised in that a polyol component with 10 to 25 wt.% of a propylene glycol started polyether with a molecular weight of 800 to 1,200 based on 1,2-propylene oxide is used.

## Revendications

1. Procédé pour préparer des mousses rigides à groupes uréthane et le cas échéant urée et isocyanurate, caractérisé en ce que l'on prépare une mousse rigide de polyuréthane par réaction de
a) un polyisocyanate aromatique avec
b) un composant polyol contenant en moyenne au moins 3 atomes d'hydrogène réactifs avec les isocyanates, et qui contient
1) 30 à 80 % en poids d'un polyéther condensé sur amine aromatique, poids moléculaire 300 à 800, à base de 70 à 100 % en poids d'oxyde de 1,2-propylène et de 0 à 30 % en poids d'oxyde d'éthylène,
2) 10 à 40 % en poids d'un polyéther condensé essentiellement sur saccharose, poids moléculaire 400 à 1 000, à base de 70 à 100 % en poids d'oxyde de 1,2-propylène et de 0 à 30 % en poids d'oxyde d'éthylène,
3) 5 à 30 % en poids d'un polyéther condensé sur propylèneglycol, poids moléculaire 500 à 1 500, à base de 70 à 100 % en poids d'oxyde de 1,2-propylène et de 0 à 30 % en poids d'oxyde d'éthylène,
4) le n- et/ou l'iso-pentane en tant qu'agents porogènes,
5) l'eau,
6) le cas échéant des produits auxiliaires et additifs,
les pourcentages en poids indiqués pour les composants 1), 2 et 3) se complétant à 100.

2. Procédé selon la revendication 1, caractérisé en ce que le polyéther condensé sur amine aromatique est à base d'o-toluylènediamine.

3. Procédé selon la revendication 1, caractérisé en ce que l'on met en oeuvre un composant polyol contenant 50 à 60 % en poids du polyéther condensé sur o-toluylènediamine, à un poids moléculaire de 450 à 650 et à base d'oxyde de 1,2-propylène.

4. Procédé selon la revendication 1, caractérisé en ce que l'on met en oeuvre un composant polyol contenant 10 à 25 % en poids d'un polyéther condensé sur propylèneglycol, de poids moléculaire 800 à 1 200, à base d'oxyde de 1,2-propylène.
